# EUROPÄISCHE PATENTSCHRIFT

(11) **EP 1 637 006 B1**
(45) Veröffentlichungstag und Bekanntmachung des Hinweises auf die Patenterteilung: **20.09.2006**
(21) Anmeldenummer: 05747844.8
(22) Anmeldetag: 29.04.2005
(51) Int. Cl.: H04Q 7/38

(54) **VERFAHREN ZUR EINBUCHUNG EINES FUNKMODULS IN EIN ZELLULARES FUNKNETZ**
METHOD FOR CHECKING A RADIO MODULE INTO A CELLULAR RADIO NETWORK
PROCEDE POUR ENREGISTRER UN MODULE RADIO DANS UN RESEAU RADIO CELLULAIRE

(30) Priorität: 01.06.2004 DE 102004027350
(43) Veröffentlichungstag der Anmeldung: 22.03.2006
(73) Patentinhaber: SIEMENS AKTIENGESELLSCHAFT, 80333 München (DE)
(72) Erfinder: ENDERLEIN, Janos-Gerold, 10115 Berlin (DE); PFITZMANN, Dieter, 14169 Berlin (DE)
(86) Internationale Anmeldenummer: PCT/DE2005/000826
(87) Internationale Veröffentlichungsnummer: WO 2005/120111

(56) Entgegenhaltungen:
- EP-A- 1 235 365
- WO-A-02/32084
- US-A1- 2003 076 808

## Beschreibung

Die Erfindung betrifft ein Verfahren zur Einbuchung eines Funkmoduls in ein zellulares Funknetz nach dem Oberbegriff von Anspruch 1 sowie ein entsprechendes Funkmodul nach dem Oberbegriff von Anspruch 11.

Funkmodule werden zunehmend für M2M(Maschine-zu-Maschine)-Applikationen eingesetzt. Typische Anwendungsgebiete sind beispielsweise drahtlose Steuer- und Regelfunktionen, Kontroll- und Überwachungsfunktionen sowie telemetrische Aufgaben. Wegen der sehr guten Netzverfügbarkeit unterstützen solche M2M-Funkmodule hauptsächlich zelluläre Funkstandards wie etwa GSM oder UMTS.

Provider solcher Funknetze legen großen Wert auf eine effektive Auslastung ihrer ausgebauten Netzkapazitäten und bevorzugen deshalb Mobile Terminals, die einen hohen Gesprächs- bzw. Datenverkehr generieren. Im Gegensatz dazu werden Mobile Terminals, welche für eine längere Zeit keinen Datenverkehr erzeugen, von den Netzbetreibern nicht mehr unterstützt und aus dem Netz ausgebucht.

Nun ist aber ein ausgebuchtes M2M-Funkmodul nur noch sehr eingeschränkt funktionell nutzbar. Zwar kann das M2M-Funkmodul noch von sich aus einen Datenverkehr initiieren, weil es sich in diesem Fall selber wieder einbucht, es ist aber von Außen nicht mehr ansprechbar und kann deshalb keinerlei Befehle entgegennehmen. Das macht einen großen Vorteil des Funkmoduls in M2M-Applikationen wieder zunichte.

Dokument US 20031076808 A1 beschreibt ein Funkmodul, das sich beim Einschalten in das Funknetz einbucht und nach bestimmter Dauer ohne Aktivität automatisch ausgebucht wird.

Als eine einfache Ausweichlösung können M2M-Funkmodule, die von dem Provider ausgebucht worden sind, manuell wieder eingebucht werden. Dies erfordert aber einen unmittelbaren Eingriff an dem Funkmodul, welcher der gewünschten reinen Fernbedienung und -wartung per Funk zuwiderläuft.

Eine andere Möglichkeit, ein M2M-Funkmodul ständig eingebucht zu halten, ist ein periodisches Senden von Datensätzen mit einer Periodendauer, welche unterhalb der von dem Provider maximal erlaubten Einbuchungszeit liegt. Ein solcher Pseudo-Datenverkehr verursacht aber unnötige Kosten.

Es ist daher Aufgabe der Erfindung, eine Lösung anzugeben, um ein Funkmodul auf einfache und kostengünstige Weise ständig ansprechbar zu halten.

Diese Aufgabe wird durch ein Verfahren gemäß Anspruch 1 und ein Funkmodul gemäß Anspruch 11 gelöst. Diese Lösung basiert auf dem Prinzip, die erzwungene Ausbuchung aus dem Funknetz zu antizipieren und ihr zuvorzukommen oder automatisch unmittelbar auf die Ausbuchung zu reagieren. In jedem Fall soll dabei ein erzwungenes Ausbuchen verhindert oder automatisch rückgängig gemacht werden. Dies kann auf eine einfache Weise geschehen, indem der beim Einschalten ohnehin in Gang gesetzte Einbuchungsprozess ausgenutzt wird. Dabei wird mit einem automatischen Aus- und Einschalten auf vorhandene Funktionalität zurückgegriffen. Alternativ kann der erneute Einbuchungsprozess auch unabhängig vom Ein- und Ausschalten in Gang gesetzt werden.

Die erfindungsgemäße Lösung hat den Vorteil, dass das Modul vom Netz nicht mehr erzwungen abgeschaltet werden kann. Unnötige Kosten, welche durch Pseudo-Datenverkehr erzeugt würden, nur um in der Funkzelle verweilen zu können, entfallen. Das M2M-Funkmodul ist somit auf eine einfache Weise zu jeder erforderlichen Zeit ansprechbar und somit per Funk aus der Ferne bedienbar.

Vorteilhafterweise wird das Autoresetsignal erzeugt, wenn das Funkmodul von dem Funknetz ausgebucht wird. Damit reagiert das erfindungsgemäße Verfahren genau im richtigen Moment auf das automatische Abschalten des Funknetzes und maximiert auf eine sehr einfache Weise seine eingebuchte Zeit.

Alternativ kann das Autoresetsignal auch in dem Funkmodul erzeugt werden, sobald ein vorbestimmtes Zeitintervall verstrichen ist. In diesem Fall ist von vornherein bekannt, in welchen (kurzen) Zeitspannen während des Autoresets das Funkmodul nicht von außen ansprechbar ist. Es ist hiermit auch gesichert, dass nach Verstreichen des genannten Zeitintervalls und der bekannten Dauer der Autoresetphase das Funkmodul in jedem Fall ansprechbar ist.

Bevorzugt wartet das Funkmodul bei dem Autoreset zwischen dem Ausschalten und dem erneuten Einschalten ein zweites Zeitintervall. Dies ist vorteilhaft, wenn von vornherein bekannt ist, dass das Funkmodul ohnehin eine gewisse Zeit nicht benötigt wird. Dadurch kann beispielsweise die Lebensdauer einer Batterie zur Versorgung des entsprechenden Geräts erhöht werden oder auch die Strahlung des Funkmoduls reduziert werden.

In einer anderen bevorzugten Ausführungsform schaltet sich das Funkmodul nach dem Autoreset unmittelbar erneut ein. Damit wird die Zeitspanne minimiert, in der das Funkmodul nicht ansprechbar ist.

Bevorzugt sind das erste und/oder zweite Zeitintervall insbesondere per Funkbefehl einstellbar. Damit lassen sich beide Zeitintervalle in Abhängigkeit des Einsatzes des Funkmoduls anpassen und mit einer externen Zeitsteuerung synchronisieren. Die beiden Zeitintervalle können somit im Hinblick auf benötigte Aktivitätszeiten des Funkmoduls, die maximal erlaubte Einbuchungsdauer in dem Funknetz oder auch die Funktionsdauer einer Batterieladung optimiert werden.

In weiter bevorzugter Weise werden die maximale Einbuchungszeit, nach der das Funknetz ein Ausbuchen des Funkmoduls auslöst, und/oder Aktivitätsintervalle bestimmt, in denen das Funkmodul aktiv sein soll, und hieraus insbesondere adaptiv das erste und/oder zweite Zeitintervall bestimmt. Hierbei müssen also diese Parameter, nämlich maximale Einbuchungszeit oder Aktivitätsintervalle des Funkmoduls, nicht a priori bekannt sein, sondern werden erst im Betrieb ermittelt. Besonders bei einer adaptiven Anpassung an diese Parameter lässt sich eine gute Optimierung erreichen.

Bevorzugt wird das erste Zeitintervall erneut gestartet, wenn das Funkmodul Daten an das Funknetz sendet. Durch das Senden/Empfangen von Daten wird nämlich bereits bei dem Provider des Funknetzes die maximal erlaubte Einbuchungszeit erneut gestartet.

Vorteilhafterweise werden vor dem Autoreset des Funkmoduls Daten aus flüchtigen Speicherbereichen desselben nicht flüchtig oder außerhalb des Funkmoduls gespeichert und nach dem Einschalten/Neustart in die flüchtigen Speicherbereiche zurückgeschrieben. Damit können sensible, aufwendig auszuwertende oder aus sonstigen Gründen wichtige Daten erhalten bleiben, und somit verliert das Funkmodul durch den Autoreset keinerlei wichtige Informationen und somit Funktionalität.

Das zellulare Funknetz ist hierbei vorteilhafterweise ein GSM-Netz, GPRS-Netz, UMTS-Netz oder EDGE-Netz; nachfolgend wird darunter aber auch ein WLAN gefasst. Da die erfinderische Idee von dem genauen Funkstandard unabhängig ist, lässt sich hiermit eine zuverlässige M2M-Applikation in allen wichtigen gängigen Standards implementieren.

Die vorteilhaften Merkmale des erfindungsgemäßen Verfahrens lassen sich entsprechend auch auf das erfindungsgemäße Funkmodul übertragen, wie es in den Unteransprüchen ausgeführt ist.

Die Erfindung wird nachstehend, auch hinsichtlich weiterer Vorteile und Merkmale, anhand von Ausführungsbeispielen und unter Bezugnahme auf die beigefügten Zeichnungen erläutert. Die Zeichnungen zeigen in:
Fig. 1 die Anordnung der funktionellen Einrichtungen eines erfindungsgemäßen Funkmoduls,
Fig. 2 die schematische Darstellung eines GSM-Netzes,
Fig. 3 ein vereinfachtes Flussdiagramm des Einbuchungsprozesses in ein GSM-Netz,
Fig. 4 ein Flussdiagramm des erfindungsgemäßen Verfahrens für die Auslösung eines kontrollierten Autoresets,
Fig. 5 ein Flussdiagramm, welches die adaptive Ermittlung des ersten und zweiten Zeitintervalls aus Aktivitäts- und Einbuchungshöchstzeitdaten darstellt,
Fig. 6 eine schematische Darstellung eines GPRS-Netzes,
Fig. 7 eine schematische Darstellung eines WLAN-Netzes.

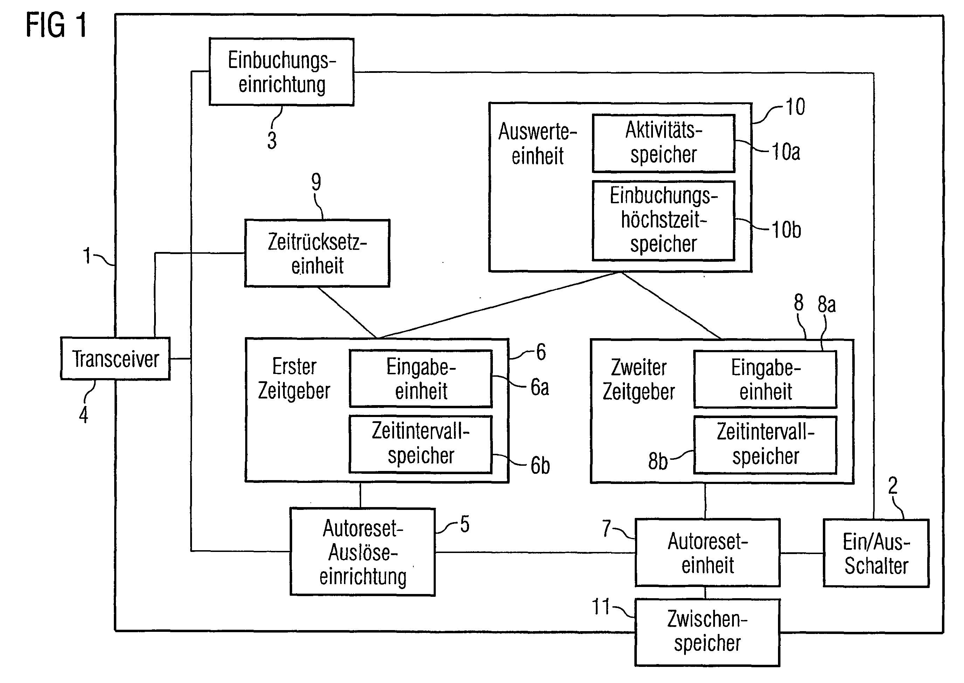

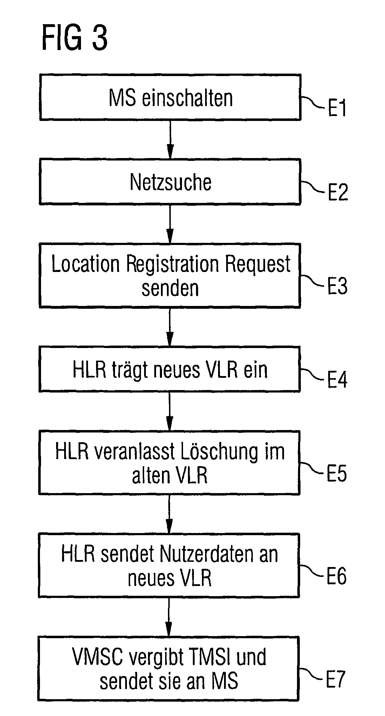

In Fig. 1 sind die funktionellen Einheiten eines erfindungsgemäßen Funkmoduls 1 schematisch dargestellt. Das Funkmodul 1 wird über einen Ein/Ausschalter 2 aktiviert und deaktiviert. Bei Aktivierung durch den Ein/Ausschalter 2 wird in einer Einbuchungseinrichtung 3 ein Einbuchungsvorgang ausgelöst, mit dem sich das Funkmodul 1 in einem Funknetz über einen Transceiver 4 anmeldet. Dieser Einbuchungsvorgang wird später im Zusammenhang mit Fig. 3 noch detailliert beschrieben.

Eine Autoreset-Auslöseeinrichtung 5 ist einerseits mit dem Transceiver 4 und andererseits mit einem ersten Zeitgeber 6 verbunden. Diese Autoreset-Auslöseeinrichtung 5 ist in der Lage, von dem Transceiver 4 oder dem ersten Zeitgeber 6 Signale zu empfangen und nach einer Auswertung ggf. ein Autoresetsignal an eine Autoreseteinheit 7 abzugeben. Die Autoreseteinheit 7 löst auf den Empfang des Autoresetsignals hin einen kontrollierten Autoreset aus.

Bei einem Autoreset veranlasst die Autoreseteinheit 7 eine vorübergehende Deaktivierung und anschließende Aktivierung des Funkmoduls 1 über den Ein/Ausschalter 2. Da mit der Aktivierung des Funkmoduls 1 über den Ein/Ausschalter 2 in der Einbuchungseinrichtung 3 der Einbuchungsvorgang ausgelöst wird, sorgt ein Autoreset dafür, dass das Funkmodul 1 sich erneut in das Funknetz einbucht. Alternativ kann nicht das ganze Funkmodul 1 aus- und eingeschaltet, sondern nur ein Ausbuchungsvorgang mit einem anschließenden Einbuchungsvorgang ausgelöst werden.

Mit der Autoreseteinheit 7 ist ein zweiter Zeitgeber 8 verbunden, welcher ein Zeitintervall vorgibt, das die Dauer der Deaktivierungsphase beim Autoreset festlegt. Sowohl der erste Zeitgeber 6 als auch der zweite Zeitgeber 8 sind jeweils mit einer Eingabeeinheit 6a, 8a und einem Zeitintervallspeicher 6b, 8b versehen. Über die Eingabeeinheit 6a, 8a kann ein erstes Zeitintervall t_cycle_on bzw. ein zweites Zeitintervall t_cycle_off eingegeben und gespeichert werden. Dabei kann diese Eingabe sowohl direkt am Modul als auch per Funk erfolgen. Das Zeitintervall t_cycle_on legt fest, wie lange das Funkmodul aktiviert und eingebucht bleibt, ehe ein Autoreset ausgelöst wird. Andererseits legt das Zeitintervall t_cycle_off diejenige Zeitspanne fest, welche das Funkmodul während des Autoresets deaktiviert bzw. ausgeschaltet oder ausgebucht bleibt.

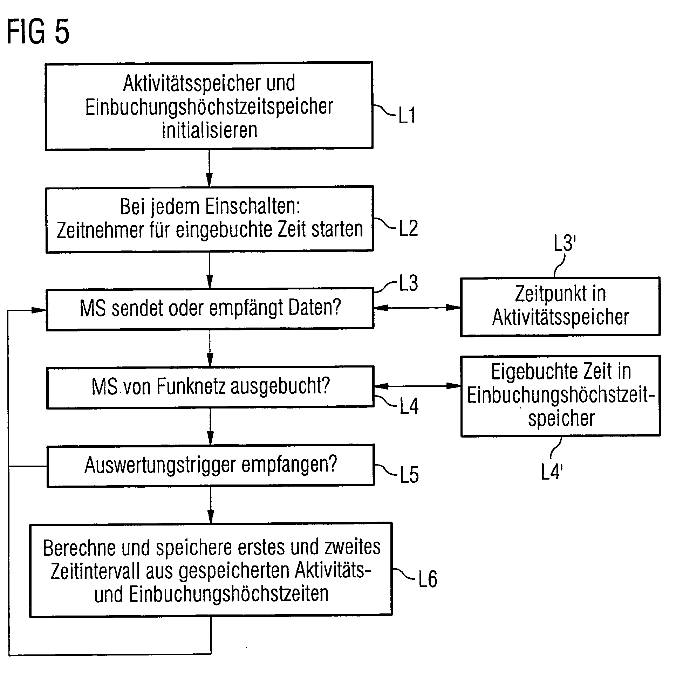

Mit dem ersten Zeitgeber 6 ist eine Zeitrücksetzeinheit 9 verbunden. Diese Zeitrücksetzeinheit 9 überwacht, ob über den Transceiver 4 ein Datenverkehr erfolgt ist. In diesem Fall wird der erste Zeitgeber 6 zurückgesetzt. Damit wird erreicht, dass das Zeitintervall t_cycle_on erneut gestartet wird, sobald das Funkmodul 1 Datenverkehr verursacht hat. Schließlich ist noch eine Auswerteeinheit 10 mit einem Aktivitätsspeicher 10a und einem Einbuchungshöchstzeitspeicher 10b versehen, wobei die Auswerteeinheit 10 mit dem ersten und dem zweiten Zeitgeber 6, 8 verbunden ist und über dessen Eingabeeinheit 6a, 8a die Zeiten t_cycle_on und t_cycle_off festlegen kann. Dazu werden in dem Aktivitätsspeicher Zeitpunkte abgelegt, zu denen das Funkmodul 1 aktiv gewesen ist, d.h. Daten gesendet oder empfangen hat und in dem Einbuchungshöchstzeitspeicher solche Zeitspannen abgelegt, nach deren Ablauf das Funknetz das Funkmodul 1 ausgebucht hat. Auf diese Weise kann die Auswerteeinheit 10 die beiden Zeiten t_cycle_on und t_cycle_off optimieren. Dieser Optimierungsprozess wird später im Zusammenhang mit Fig. 5 noch genauer beschrieben.

Damit bei dem Autoreset keine Daten verloren gehen, werden wichtige Daten in einem Zwischenspeicher 11 abgelegt. Dieser Zwischenspeicher ist entweder nicht flüchtig, etwa ein Flash oder ein Magnetspeicher, oder er ist von der Stromversorgung des Funkmoduls 1 unabhängig und wird daher durch den Autoreset nicht gelöscht. Auf diese Weise können wichtige Daten gepuffert werden, und das Funkmodul 1 ist nach dem erneuten Einschalten sofort wieder in dem alten Betriebszustand.

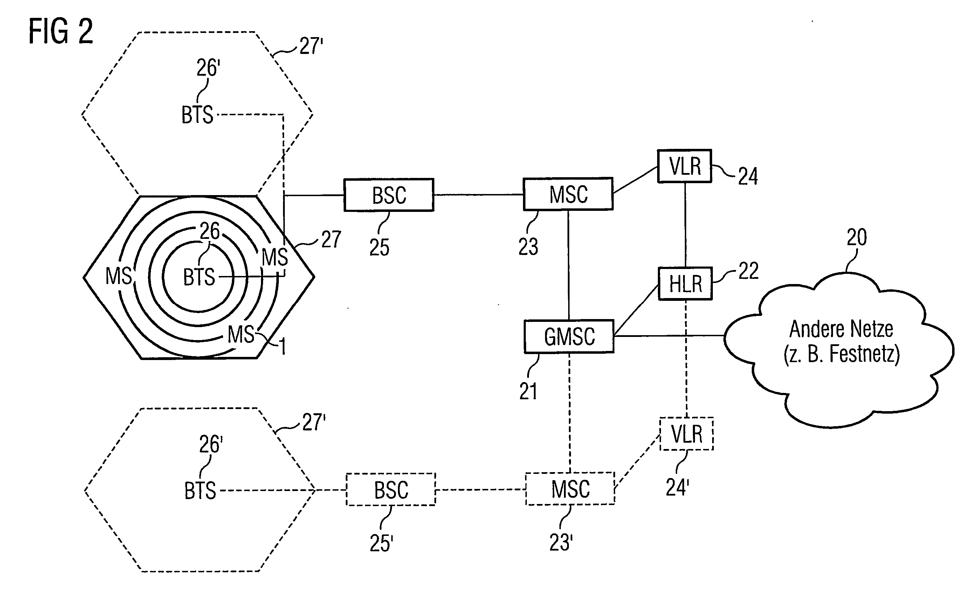

In Fig. 2 ist beispielhaft ein GSM-Netz als zugehöriges Funknetz zu dem Funkmodul 1 dargestellt. Als Schnittstelle des GSM-Netzes zu anderen Netzen wie etwa dem Festnetz 20 fungiert die GMSC 21 (Gateway Mobile Switching Center). Die GMSC 21 hat Zugriff auf ein HLR 22 (Home Location Register), in dem zentral Nutzerdaten für alle Nutzer des GSM-Netzes abgelegt sind. Außerdem ist die GMSC 21 mit einer Vielzahl von MSCs 23, 23' (Mobile Switching Center) verbunden, welche jeweils als Vermittlungsstelle in einer bestimmten Region dienen.

Dabei hat jede MSC 23 Zugriff auf ein VLR 24 (Visitor Location Register), in welchem Kopien der Nutzerdaten aus dem HLR 22 für diejenigen Nutzer abgelegt sind, welche sich im Zuständigkeitsbereich der MSC 23 aufhalten.

Jede MSC 23 ist über einen BSC 25 (Base Station Controller) mit einer Vielzahl von Basisstationen BTS 26, 26' (Base Transceiver Station) verbunden. Jede dieser Basisstationen 26, 26' versorgt per Funk eine zugehörige Funkzelle 27, 27'. In der Funkzelle 27 befinden sich mobile Endgeräte MS (Mobile Station), wobei auch das im Zusammenhang mit Fig. 1 beschriebene Funkmodul 1 eine solche Mobile Station ist.

Zum besseren Verständnis soll im Zusammenhang mit Fig. 3 nun der Einbuchungsprozess genauer beschrieben werden, welcher von der Einbuchungseinrichtung 3 ausgelöst wird. Nach dem Einschalten des Funkmoduls 1 (E1) beginnt das Funkmodul 1 mit der Netzsuche (E2). Dabei wird die Intensität verschiedener Frequenzkanäle gemessen und derjenige Kanal mit dem besten Empfang ausgesucht, welcher dem eigenen Netz zugehörig und nicht aus anderen Gründen gesperrt ist. Anschließend sendet das Funkmodul 1 seinen Einbuchungswunsch an die MSC 23 in Form eines Location Registration Requests (E3). Um die Einbuchung vorzunehmen, trägt daraufhin das HLR 22 das für die Funkzelle 27 des Funkmoduls 1 zuständige VLR 24 ein (E4). Weiterhin veranlasst das HLR 22 die Löschung der Nutzerdaten des Funkmoduls 1 in dem alten VLR (E5) welches beispielsweise das VLR 24' gewesen sein könnte. Außerdem sendet das HLR 22 die Nutzerdaten an das nunmehr zuständige neue VLR 24 (E6). Die MSC 23, die nun als VMSC (Visited MSC) bezeichnet wird, vergibt nun eine temporäre Kennung (TMSI, Temporary Mobile Subscriber Identity) und sendet diese an das Funkmodul 1 (E7). Im Falle eines statischen Einsatzortes für das Funkmodul 1 ist dieser Prozess natürlich insoweit abgekürzt, als altes und neues VLR 24 identisch sind.

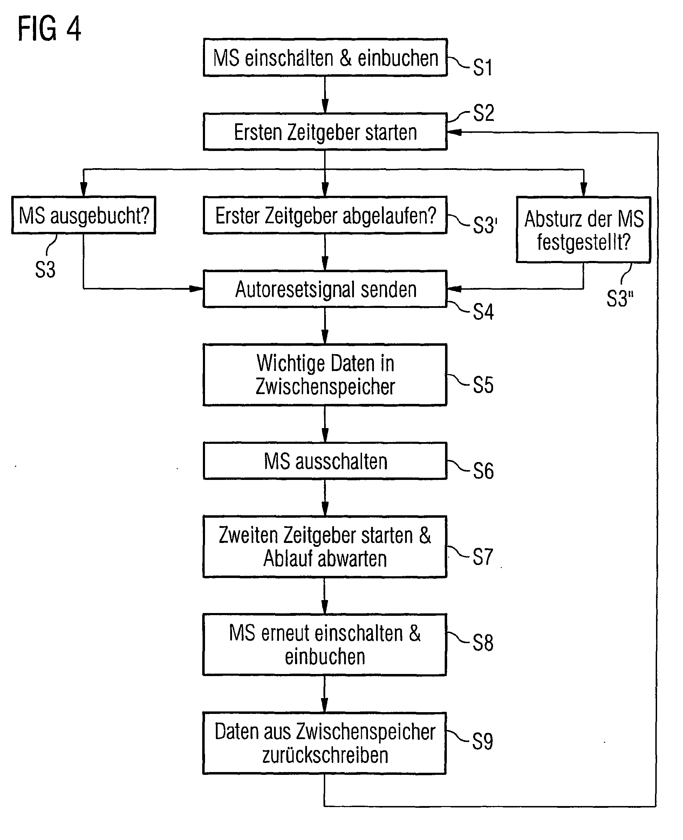

Unter Bezugnahme auf Fig. 4 wird nun das erfindungsgemäße Verfahren zum Auslösen eines kontrollierten Autoresets in dem zuvor beschriebenen Funkmodul 1 näher erläutert. Zunächst bucht sich das Funkmodul 1 beim Einschalten wie soeben beschrieben in das Funknetz ein (S1). Dabei wird der erste Zeitgeber 6 gestartet (S2). Das Funkmodul 1 wartet nun in einer parallelen Schleife auf verschiedene mögliche Ereignisse, welche einen Autoreset auslösen sollen. Dieses auslösende Ereignis kann eine Ausbuchung des Funkmoduls 1 durch das Funknetz sein (S3). Alternativ kann auch der erste Zeitgeber, welcher über die Zeit t_cycle_on die Dauer der Einbuchung festlegt, abgelaufen sein (S3'). Schließlich kann auch ein Absturz des Funkmoduls 1 festgestellt worden sein (S3''), entweder automatisch durch eine Software oder durch einen Mitarbeiter. Ist eines dieser Ereignisse eingetreten, so generiert die Autoreset-Auslöseeinrichtung 5 das Autoresetsignal und sendet es an die Autoreseteinheit 7 (S4). Die Autoreseteinheit 7 veranlasst daraufhin, dass alle wichtigen Daten in den Zwischenspeicher 11 gespeichert werden (S5). Anschließend wird über den Ein/Ausschalter 2 das Funkmodul 1 deaktiviert (S6). Dabei wird das Funkmodul 1 nur insoweit deaktiviert, dass die Autoreseteinheit 7 noch den zweiten Zeitgeber 8 starten und dessen Ablauf überwachen kann (S7). Außerdem kann auch der Zwischenspeicher 11 trotz der Deaktivierung noch mit Strom versorgt bleiben, sofern es sich nicht ohnehin um einen nichtflüchtigen Speicher handelt. Nach Ablauf des zweiten Zeitgebers, wodurch der Ablauf der Zeit t_cycle_off angezeigt ist, schaltet die Autoreset-Einheit 7 das Funkmodul 1 erneut ein, welches sich daraufhin wiederum in das Funknetz einbucht (S8). Im Anschluss an den Einbuchungsvorgang werden die Daten aus dem Zwischenspeicher 11 wieder an die Stellen zurückgeschrieben, von denen sie gesichert worden sind (S9). Sofern hier Daten auch schon für den Einbuchungsvorgang benötigt wurden, muss dieses Zurückschreiben natürlich nach dem Einschalten und noch vor dem Einbuchungsvorgang stattfinden. Das Funkmodul 1 befindet sich jetzt wieder in demselben Zustand wie vor dem Auslösen des Autoresets und setzt sein Überwachungsverfahren für einen kontrollierten Autoreset in einer Schleife wieder beim Schritt S2 fort, indem der erste Zeitgeber 6 erneut gestartet wird.

Es ist auch ein weniger harter Autoreset vorstellbar, bei dem das Funkmodul 1 nicht komplett neu gestartet, sondern nur einen Ausbuchungsvorgang mit anschließender erneuter Einbuchung vorgenommen wird.

Die Wahl der beiden Zeitintervalle t_cycle_on und t_cycle_off kann im Bezug auf einige Parameter optimiert werden. Zu solchen Optimierungsparametern gehört die Funktionsdauer der Batterieladung des Funkmoduls 1, die Gesamtmenge an übertragenen Daten oder die Dauer solcher Übertragungsvorgänge oder auch die Belastung durch die Strahlung beim Senden. Auch die Aktivitätszyklen der Applikation, die auf dem M2M-Funkmodul 1 abläuft, kann Einfluss auf diese beiden Zeitintervalle haben. Beispielsweise könnte es sein, dass die Applikation nur an einem bestimmten Wochentag senden soll.

Ein naheliegendes Optimierungsschema für die Zeiten t_cycle_on und t_cycle_off könnten sein, dass diese Zeiten so gewählt sind, dass das Funkmodul genau zu den Zeiten eingebucht ist, in denen Datenübertragungen erwartet werden. Die Zeit t_cycle_off kann beispielsweise so gewählt werden, dass das Funkmodul 1 sich in solchen Zeiten ausschaltet, in denen ohnehin keine Aktivität zu erwarten ist. Andererseits kann aber auch diese Zeit gerade als O s gewählt werden, wenn die Applikation nahezu in Echtzeit arbeitet. Der Parameter t_cycle_on schließlich kann vorteilhafterweise so gewählt werden, dass er gerade um ein Weniges unterhalb der maximal erlaubten Einbuchungszeit des Funknetzes liegt, so dass das Funkmodul 1 praktisch zu jeder Zeit eingebucht ist.

Die Wahl der Zeitintervalle kann aber auch durch Adaption dieser Zeiten durch eine automatische Lernphase des Funkmoduls 1 erfolgen. In dieser Phase speichert das Funkmodul 1 die von dem Funknetz erzwungenen Abschaltzeiten und die von der Applikation geforderten aktiven und nicht aktiven Zeiten und erzeugt einen vorteilhaften Aktivitätszyklus des Funkmoduls 1. Dabei kann natürlich insbesondere die Funktionsdauer mit einer Batterieladung maximiert werden.

Eine solche adaptive Lernphase ist in Fig. 5 genauer dargestellt. Dabei werden zu Beginn der Aktivitätsspeicher 10a und der Einbuchungshöchstzeitspeicher 10b initialisiert, beispielsweise bei der Montage des Funkmoduls oder auch später zu einem beliebigen gewählten Zeitpunkt (L1). Bei jedem Einschalten des Funkmoduls 1 wird dann ein zusätzlicher Zeitnehmer gestartet, welcher die eingebuchte Zeit des Funkmoduls 1 misst (L2). In einer Schleife wird dann geprüft, ob das Funkmodul 1 Daten sendet oder empfängt (L3), und die Zeitpunkte, in denen solche Sende- oder Empfangsvorgänge stattfinden, werden in dem Aktivitätsspeicher 10a abgelegt (L3'). Weiterhin wird abgefragt, ob das Funkmodul 1 von dem Funknetz ausgebucht worden ist (L4) und die von dem zusätzlichen Zeitnehmer gemessene eingebuchte Zeit des Funkmoduls 1 in dem Einbuchungshöchstzeitspeicher 10b abgelegt (L4').

Die Auswerteeinheit 10 prüft anschließend, ob sie einen Auswertungstrigger empfangen hat (L5). Ein solcher Auswertungstrigger kann per Funk oder unmittelbar über die Schnittstelle in das Funkmodul 1 eingegeben worden sein oder beispielsweise periodisch ausgelöst werden. Wenn die Auswerteeinheit 10 einen solchen Auswertungstrigger empfängt, so berechnet sie die beiden Zeitintervalle t_cycle_on und t_cycle_off aus den gespeicherten Aktivitäts- und Einbuchungshöchstzeitpunkten nach einem vorgegebenen Optimierungsschema (L6). Die berechneten Zeiten werden anschließend über die Eingabeeinheiten dem ersten und zweiten Zeitgeber 6, 8 übergeben. Anschließend oder sofern kein Auswertungstrigger empfangen worden ist beginnt ein weiterer Schleifendurchlauf (bei L3).

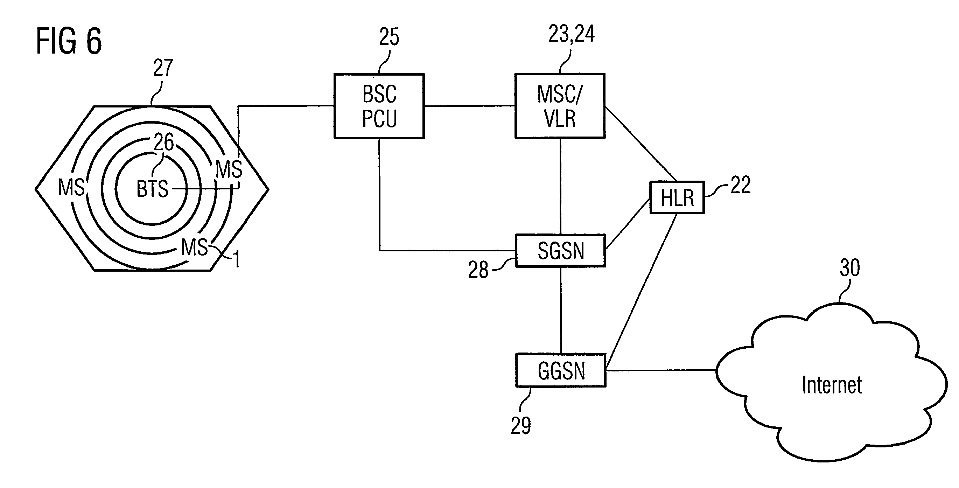

Obwohl das erfindungsgemäße Verfahren für das Funkmodul 1 bisher im Zusammenhang mit einem GSM-Netz beschrieben worden ist, lässt es sich auf beliebige zellulare Funkstandards ausweiten. Als weiteres Beispiel ist in Fig. 6 schematisch und vereinfacht ein GPRS-Netz dargestellt. Dieses unterscheidet sich von dem GSM-Netz aus Fig. 2 darin, dass eine Verbindung zwischen dem Funkmodul 1 und dem Internet 30 über die übliche GSM-Verbindung hinaus noch über weitere Knoten läuft, um ein paketorientiertes Datenformat zu unterstützen. Der wesentliche Unterschied zu dem GSM-Netz ist, dass zusätzlich ein SGSN 28 und ein GGSN 29 vorgesehen sind (Serving bzw. Gateway GPRS Support Note), welche für das Routing der Datenpakete zuständig sind. Die BSC 25 ist um eine PCU (Paket Control Unit) erweitert, um diese Datenpakete auch im Radiosubsystem an das Funkmodul 1 übertragen zu können.

Wie aus der eben gegebenen kurzen Beschreibung eines GPRS-Netzes hervorgeht, hängt die Funktionalität der Erfindung davon überhaupt nicht ab. Das Funkmodul 1 kann also ohne weiteres auch in einem GPRS-Netz eingesetzt werden.

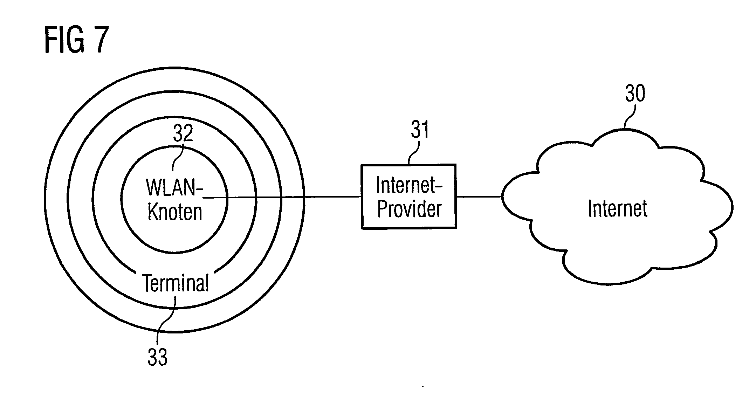

Als weiteres Beispiel für einen anderen Netzstandard soll im Zusammenhang mit Fig. 7 ein WLAN beschrieben werden. Hier ist der Brückenkopf zum Internet 30 ein Internetprovider 31, welcher mit einem Server oder WLAN-Knoten 32 verbunden ist. Dieser WLAN-Knoten 32 steht in Funkverbindung mit einem Terminal 33. Dieses Terminal kann ein beliebiges Endgerät sein, beispielsweise ein Notebook, ein PDA oder ein sonstiges Gerät mit WLAN-Schnittstelle. Das Funkmodul 1 wäre in diesem Fall mit dem Terminal 33 verbunden oder darin integriert. Auch hier hängt die Funktionalität des Funkmoduls 1 nicht von dem verwendeten Funkstandard ab.

In ähnlicher Weise lässt sich die Erfindung natürlich auf weitere zellulare Funkstandards erweitern, wie etwa UMTS.

Erfindungsgemäß werden also die beschriebenen Vorteile erreicht, dass das Funkmodul 1 ständig oder zumindest zu den erforderlichen Zeiten in dem Funknetz eingebucht bleiben kann, auch wenn der Provider dafür eine Höchstzeit vorsieht, nach deren Ablauf er das Funkmodul 1 ausbucht. Eine Umgehungslösung durch Erzeugen von Pseudo-Datenverkehr wie beispielsweise einer inhaltsleeren SMS-Nachricht kann auf diese Weise vermieden werden. Die Lösung ist außerdem sehr robust, da das Funkmodul 1 auch nach einem Absturz einfach wieder hochfährt und sich automatisch einbucht. Durch Einstellung der beiden Zeiten t_cycle_on und t_cycle_off ist auch eine Optimierung von Parametern/Funktionen möglich (Gesprächsdauer, Feldstärkebelastung, Ladezyklen). Diese Optimierung kann per Funk ferngesteuert werden und ist durch den beschriebenen Lernmechanismus darüber hinaus dynamisch.

### Bezugszeichenliste

- 1: Funkmodul
- 2: Ein/Ausschalter
- 3: Einbuchungseinrichtung
- 4: Transceiver
- 5: Autoreset-Auslöseeinrichtung
- 6: erster Zeitgeber
- 6a: Eingabeeinheit
- 6b: Zeitintervallspeicher
- 7: Autoreseteinheit
- 8: zweiter Zeitgeber
- 8a: Eingabeeinheit
- 8b: Zeitintervallspeicher
- 9: Zeitrücksetzeinheit
- 10: Auswerteeinheit
- 10a: Aktivitätsspeicher
- 10b: Einbuchungshöchstzeitspeicher
- 11: Zwischenspeicher
- 20: Festnetz
- 21: GMSC
- 22: HLR
- 23: MSC
- 24: VLR
- 25: BSC
- 26: BTS
- 27: Funkzelle
- 28: SGSN
- 29: GGSN
- 30: Internet
- 31: Internetprovider
- 32: WLAN-Knoten
- 33: Terminal

## Patentansprüche

1. Verfahren zur Einbuchung eines Funkmoduls (1) in ein zellulares Funknetz, wobei sich das Funkmodul (1) beim Einschalten automatisch in das Funknetz einbucht, indem
- das Funkmodul (1) eine Einbuchungsnachricht an das Funknetz übermittelt und
- im Funknetz Einbuchungsdaten für das Funkmodul (1) gespeichert werden,
- wobei bei Ausbuchen des Funkmoduls (1) die Einbuchungsdaten in dem Funknetz wieder gelöscht werden,
**dadurch gekennzeichnet, dass**
in Antwort auf ein Autoresetsignal automatisch ein Autoreset ausgelöst wird, bei dem sich das Funkmodul (1) vorübergehend aus- und anschließend erneut einschaltet oder sich im Funknetz ab- und wieder anmeldet.

2. Verfahren nach Anspruch 1,
wobei das Autoresetsignal erzeugt wird, wenn das Funkmodul (1) von dem Funknetz ausgebucht wird.

3. Verfahren nach Anspruch 1,
wobei das Autoresetsignal in dem Funkmodul erzeugt wird, sobald ein erstes Zeitintervall verstrichen ist.

4. Verfahren nach einem der Ansprüche 1 bis 3,
wobei das Funkmodul (1) bei dem Autoreset zwischen dem Ausschalten und dem erneuten Einschalten ein zweites Zeitintervall wartet.

5. Verfahren nach einem der Ansprüche 1 bis 3,
wobei das Funkmodul bei dem Autoreset unmittelbar nach dem Ausschalten erneut einschaltet.

6. Verfahren nach Anspruch 4 oder 5, wobei das erste und/oder zweite Zeitintervall insbesondere per Funkbefehl einstellbar sind.

7. Verfahren nach Anspruch 6,
wobei eine maximale Einbuchungszeit, nach der das Funknetz ein Ausbuchen des Funkmoduls (1) auslöst, und/oder Aktivitätsintervalle bestimmt werden, in denen das Funkmodul (1) aktiv sein soll, und hieraus insbesondere adaptiv das erste und/oder zweite Zeitintervall bestimmt wird.

8. Verfahren nach einem der Ansprüche 3 bis 7,
wobei das erste Zeitintervall erneut gestartet wird, wenn das Funkmodul (1) Daten in das Funknetz sendet oder aus dem Funknetz empfängt.

9. Verfahren nach einem der Ansprüche 1 bis 8,
wobei vor dem Autoreset des Funkmoduls (1) Daten aus flüchtigen Speicherbereichen des Funkmoduls (1) nichtflüchtig oder außerhalb des Funkmoduls (1) gespeichert und nach dem Einschalten in die flüchtigen Speicherbereiche zurückgeschrieben werden.

10. Verfahren nach einem der Ansprüche 1 bis 9,
wobei das Funknetz ein GSM-Netz, GPRS-Netz, UMTS-Netz, EDGE-Netz oder WLAN ist.

11. Funkmodul (1) für ein zellulares Funknetz, welches folgendes aufweist:
- einen Transceiver (4) zum Senden und Empfangen von Nachrichten,
- eine Einbuchungseinrichtung (3), die mit dem Transceiver (4) verbunden und dafür ausgelegt ist, beim Einschalten des Funkmoduls (1) eine Einbuchungsnachricht zu erzeugen und über den Transceiver (4) zu senden,
**gekennzeichnet durch**
eine Autoreset-Auslöseeinrichtung (5), welche ein Autoresetsignal erzeugen oder empfangen kann und
eine Autoreseteinheit (7), welche mit der Autoreset-Auslöseeinrichtung (5) verbunden ist und das Autoresetsignal empfangen kann und dafür ausgelegt ist, auf diesen Empfang hin das Funkmodul (1) ab- und anschließend wieder einzuschalten oder das Funkmodul (1) aus- und mittels der Einbuchungseinrichtung (3) anschließend wieder einzubuchen.

12. Funkmodul (1) nach Anspruch 11,
wobei die Autoreset-Auslöseeinrichtung (5) dafür ausgelegt ist, ein Autoresetsignal auf den Empfang einer Ausbuchungsnachricht hin abzugeben, und wobei diese Ausbuchungsnachricht eine Information umfasst, dass die Einbuchungsdaten des Funkmoduls (1) in dem Funknetz gelöscht sind.

13. Funkmodul (1) nach Anspruch 11,
wobei das Funkmodul (1) zusätzlich einen ersten Zeitgeber (6) zur Erfassung des Ablaufs eines ersten Zeitintervalls aufweist, der mit der Autoreset-Auslöseeinrichtung (5) verbunden ist, welche nach Ablauf des ersten Zeitintervalls ein Autoresetsignal ausgeben kann.

14. Funkmodul (14) nach einem der Ansprüche 11 bis 13,
wobei das Funkmodul zusätzlich einen zweiten Zeitgeber (8) zur Erfassung des Ablaufs eines zweiten Zeitintervalls aufweist, der mit der Autoreseteinheit (7) verbunden ist, wobei diese dafür ausgelegt ist, bei dem Autoreset nach dem Ausschalten erst um das zweite Zeitintervall verzögert das Funkmodul (1) erneut einzuschalten.

15. Funkmodul (1) nach Anspruch 13 oder 14,
wobei der erste und/oder der zweite Zeitgeber (6, 8) jeweils eine Eingabeeinheit (6a, 8a) und einen Zeitintervallspeicher (6b, 8b) aufweist und dafür ausgelegt ist, ein über die Eingabeeinheit (6a, 8a) eingegebenes Zeitintervall zu speichern und somit das erste bzw. zweite Zeitintervall festzulegen.

16. Funkmodul (1) nach Anspruch 15,
wobei die Eingabeeinheit (6a, 8a) mit dem Transceiver (4) verbunden ist und dafür ausgelegt ist, dass das erste bzw. zweite Zeitintervall per Funkbefehl festgelegt wird.

17. Funkmodul (1) nach Anspruch 16,
wobei das Funkmodul (1) zusätzlich
einen Aktivitätsspeicher (10a), welcher Aktivitätszeiten des Funkmoduls hält,
einen Einbuchungshöchstzeitspeicher (10b), welcher eine maximal mögliche Einbuchungszeit des Funkmoduls (1) in dem Funknetz hält, sowie
eine Auswerteeinheit (10) aufweist,
wobei die Auswerteeinheit (10) auf den Aktivitätsspeicher (10a) und den Einbuchungshöchstzeitspeicher (10b) zugreifen und die Eingabeeinheit (6a, 8a) ansprechen kann und dafür ausgelegt ist, das erste und zweite Zeitintervall insbesondere adaptiv festzulegen.

18. Funkmodul (1) nach einem der Ansprüche 13 bis 17,
**gekennzeichnet durch**
eine Zeitrücksetzeinheit (9), welche mit dem Transceiver (4) und dem ersten Zeitgeber (6) verbunden und dafür ausgelegt ist, nach jedem Senden oder Empfangen von Daten des Funkmoduls (1) an das Funknetz den ersten Zeitgeber (6) zurückzusetzen.

19. Funkmodul (1) nach einem der Ansprüche 11 bis 18,
**gekennzeichnet durch**
einen Zwischenspeicher (11), welcher auch bei Unterbrechung der Stromversorgung des übrigen Funkmoduls (1) nichtflüchtig ist und somit Daten während des Autoresets puffern kann.

20. Funkmodul (1) nach einem der Ansprüche 11 bis 19, ausgebildet als GSM-Modul, GRPS-Modul, UMTS-Modul, EDGE-Modul oder WLAN-Modul.

## Claims

1. Method for logging a radio module (1) into a cellular radio network, where the radio module (1) automatically logs into the radio network when it is turned on by virtue of
- the radio module (1) transmitting a login message to the radio network and
- the radio network storing login data for the radio module (1),
- where the login data are deleted from the radio network again when the radio module (1) logs out,
**characterized in that**
in response to an autoreset signal an autoreset is automatically triggered in which the radio module (1) temporarily turns off and then on again or deactivates and registers again in the radio network.

2. Method according to Claim 1,
where the autoreset signal is produced when the radio module (1) is logged out of the radio network.

3. Method according to Claim 1,
where the autoreset signal is produced in the radio module as soon as a first time interval has elapsed.

4. Method according to one of Claims 1 to 3,
where the radio module (1) waits a second time interval between turning off and turning on again in the event of the autoreset.

5. Method according to one of Claims 1 to 3,
where the radio module turns on again immediately after turning off in the event of the autoreset.

6. Method according to Claim 4 or 5, where the first and/or second time interval can be set, particularly by radio command.

7. Method according to Claim 6,
where a maximum login time, after which the radio network logs out the radio module (1), and/or activity intervals are determined in which the radio module (1) is supposed to be active, and these are used to determine the first and/or second time interval(s), in particular adaptively.

8. Method according to one of Claims 3 to 7,
where the first time interval is restarted when the radio module (1) sends data to the radio network or receives data from the radio network.

9. Method according to one of Claims 1 to 8,
where data from volatile memory areas of the radio module (1) are stored in nonvolatile form or outside the radio module (1) before the autoreset for the radio module (1) and are written back to the volatile memory areas after it is turned on.

10. Method according to one of Claims 1 to 9,
where the radio network is a GSM network, a GPRS network, a UMTS network, an EDGE network or a WLAN.

11. Radio module (1) for a cellular radio network, which has the following:
- a transceiver (4) for sending and receiving messages,
- a login device (3) which is connected to the transceiver (4) and is designed to produce a login message and to send it via the transceiver (4) when the radio module (1) is turned on,
**characterized by**
an auto reset trigger device (5) which can produce or receive an autoreset signal, and
an autoreset unit (7) which is connected to the autoreset trigger device (5) and can receive the autoreset signal and which is designed to disconnect the radio module (1) and then to turn it on again or to log the radio module (1) out and then in again, using the login device (3), when said autoreset signal is received.

12. Radio module (1) according to Claim 11,
where the autoreset trigger device (5) is designed to output an autoreset signal when a logout message is received, and where this logout message comprises information that the login data for the radio module (1) have been deleted from the radio network.

13. Radio module (1) according to Claim 11,
where the radio module (1) additionally has a first timer (6) for detecting when a first time interval has elapsed which is connected to the autoreset trigger device (5), which can output an autoreset signal when the first time interval has elapsed.

14. Radio module (14) according to one of Claims 11 to 13,
where the radio module additionally has a second timer (8) for detecting when a second time interval has elapsed which is connected to the autoreset unit (7), the latter being designed to turn the radio module (1) on again only after a delay by the second time interval after it has been turned off in the event of the autoreset.

15. Radio module (1) according to Claim 13 or 14,
where the first and/or the second timer (6, 8) respectively has/have an input (6a, 8a) and a time interval memory (6b, 8b) and is/are designed to store a time interval which has been input using the input unit (6a, 8a) and thus to define the first or second time interval.

16. Radio module (1) according to Claim 15,
where the input unit (6a, 8a) is connected to the transceiver (4) and is designed to define the first or second time interval by radio command.

17. Radio module (1) according to Claim 16,
where the radio module (1) additionally has
an activity memory (10a) which holds activity times for the radio module,
a maximum login time memory (10b) which holds a maximum possible login time for the radio module (1) in the radio network, and also
an evaluation unit (10),
where the evaluation unit (10) can access the activity memory (10a) and the maximum login time memory (10b) and can address the input unit (6a, 8a) and is designed to define the first and second time intervals, in particular adaptively.

18. Radio module (1) according to one of Claims 13 to 17,
**characterized by**
a time reset unit (9) which is connected to the transceiver (4) and to the first timer (6) and is designed to reset the first timer (6) whenever data in the radio module (1) have been sent to or received from the radio network.

19. Radio module (1) according to one of Claims 11 to 18,
**characterized by**
a buffer store (11) which is nonvolatile even when the power supply for the rest of the radio module (1) is interrupted and which can thus buffer data during the autoreset.

20. Radio module (1) according to one of Claims 11 to 19,
in the form of a GSM module, a GPRS module, a UMTS module, an EDGE module or a WLAN module.

## Revendications

1. Procédé de connexion d'un module radio (1) dans un réseau radio cellulaire, le module radio (1) se connectant automatiquement dans le réseau radio lors de sa mise en service par le fait que
- le module radio (1) transmet un message de connexion au réseau radio, et
- des données de connexion sont mémorisées pour le module radio (1) dans le réseau radio,
- les données de connexion étant effacées dans le réseau radio lors de la déconnexion du module radio (1),
**caractérisé par le fait que**, en réponse à un signal de remise à zéro automatique, on déclenche automatiquement une remise à zéro automatique lors de laquelle le module radio (1) est temporairement mis hors service puis remis en service ou se déconnecte et se reconnecte dans le réseau radio.

2. Procédé selon la revendication 1,
dans lequel on produit le signal de remise à zéro automatique lorsque le module radio (1) est déconnecté du réseau radio.

3. Procédé selon la revendication 1,
dans lequel on produit le signal de remise à zéro automatique dans le réseau radio dès qu'un premier intervalle de temps est écoulé.

4. Procédé selon l'une des revendications 1 à 3,
dans lequel, lors de la remise à zéro automatique, le module radio (1) attend pendant un deuxième intervalle de temps entre la mise hors service et la remise en service.

5. Procédé selon l'une des revendications 1 à 3,
dans lequel, lors de la remise à zéro automatique, le module radio est remis en service immédiatement après la mise hors service.

6. Procédé selon la revendication 4 ou 5,
dans lequel le premier et/ou le deuxième intervalle de temps sont réglables notamment par des instructions radio.

7. Procédé selon la revendication 6,
dans lequel on détermine un temps de connexion maximal après lequel le réseau radio déclenche une déconnexion du module radio (1) et/ou des intervalles d'activité pendant lesquels le module radio (1) doit être actif et on détermine à partir de là, notamment de manière adaptative, le premier et/ou le deuxième intervalle de temps.

8. Procédé selon l'une des revendications 3 à 7,
dans lequel on redémarre le premier intervalle de temps lorsque le module radio (1) envoie des données dans le réseau radio ou reçoit des données du réseau radio.

9. Procédé selon l'une des revendications 1 à 8,
dans lequel, avant la remise à zéro automatique du module radio (1), on mémorise de manière non volatile ou en dehors du module radio (1) des données issues de zones de mémoire volatiles du module radio (1) et, après la remise en service, on les réenregistre dans les zones de mémoire volatiles.

10. Procédé selon l'une des revendications 1 à 9,
dans lequel le réseau radio est un réseau GSM, GPRS, UMTS, EDGE ou un WLAN.

11. Module radio (1) pour un réseau radio cellulaire, comportant les éléments suivants :
- un émetteur-récepteur (4) pour l'émission et la réception de messages,
- un dispositif de connexion (3) qui est relié à l'émetteur-récepteur (4) et qui est conçu pour, lors de la mise en service du module radio (1), produire un message de connexion et l'émettre par l'intermédiaire de l'émetteur-récepteur (4),
**caractérisé par**
un dispositif de déclenchement de remise à zéro automatique (5) qui peut produire ou recevoir un signal de remise à zéro automatique, et
une unité de remise à zéro automatique (7) qui est reliée au dispositif de déclenchement de remise à zéro automatique (5), qui peut recevoir le signal de remise à zéro automatique et qui est conçue pour, suite à cette réception, mettre hors service le module radio (1) puis le remettre en service ou déconnecter le module radio (1) puis le reconnecter au moyen du dispositif de connexion (3).

12. Module radio (1) selon la revendication 11,
dans lequel le dispositif de déclenchement de remise à zéro automatique (5) est conçu pour délivrer un signal de remise à zéro automatique suite à la réception d'un message de déconnexion et dans lequel ce message de déconnexion comprend une information indiquant que les données de connexion du module radio (1) sont effacées dans le réseau radio.

13. Module radio (1) selon la revendication 11,
dans lequel le module radio (1) comporte en plus un premier temporisateur (6) qui est destiné à la détection de l'expiration d'un premier intervalle de temps et qui est relié au dispositif de déclenchement de remise à zéro automatique (5) qui peut délivrer un signal de remise à zéro automatique après l'expiration du premier intervalle de temps.

14. Module radio (14) selon l'une des revendications 11 à 13,
dans lequel le module radio comporte en plus un deuxième temporisateur (8) qui est destiné à la détection de l'expiration d'un deuxième intervalle de temps et qui est relié à l'unité de remise à zéro automatique (7), celle-ci étant conçue pour, lors de la remise à zéro automatique, remettre en service le module radio (1) après la mise hors service mais avec un retard égal au deuxième intervalle de temps.

15. Module radio (1) selon la revendication 13 ou 14,
dans lequel le premier et/ou le deuxième temporisateur (6, 8) comportent chacun une unité d'entrée (6a, 8a) et une mémoire d'intervalle de temps (6b, 8b) et sont conçus pour mémoriser un intervalle de temps entré par l'intermédiaire de l'unité d'entrée (6a, 8a) et spécifier ainsi respectivement le premier et le deuxième intervalle de temps.

16. Module radio (1) selon la revendication 15,
dans lequel l'unité d'entrée (6a, 8a) est reliée à l'émetteur-récepteur (4) et est conçue pour que le premier ou le deuxième intervalle de temps soit spécifié par des instructions radio.

17. Module radio (1) selon la revendication 16,
dans lequel le module radio (1) comporte en plus :
une mémoire d'activité (10a) qui garde des temps d'activité du module radio,
une mémoire de temps maximal de connexion (10b) qui garde un temps de connexion maximal possible du module radio (1) dans le réseau radio, et
une unité d'évaluation (10),
l'unité d'évaluation (10) accédant à la mémoire d'activité (10a) et à la mémoire de temps maximal de connexion (10b), pouvant s'adresser à l'unité d'entrée (6a, 8a) et étant conçue pour spécifier, notamment de manière adaptative, le premier et le deuxième intervalle de temps.

18. Module radio (1) selon l'une des revendications 13 à 17,
**caractérisé par** une unité de remise à zéro de temporisation (9) qui est reliée à l'émetteur-récepteur (4) et au premier temporisateur (6) et qui est conçue pour remettre à zéro le premier temporisateur (6) après chaque émission ou réception de données du module radio (1) via le réseau radio.

19. Module radio (1) selon l'une des revendications 11 à 18,
**caractérisé par** une mémoire intermédiaire (11) qui n'est pas volatile, même lors d'une coupure de l'alimentation en courant du reste du module radio (1), et qui peut donc garder des données en mémoire tampon pendant la remise à zéro automatique.

20. Module radio (1) selon l'une des revendications 11 à 19,
conçu comme un module GSM, GPRS, UMTS, EDGE ou WLAN.
